# EUROPÄISCHE PATENTANMELDUNG

(11) **EP 2 161 095 A1**
(43) Veröffentlichungstag der Anmeldung: **10.03.2010**
(21) Anmeldenummer: 08105240.9
(22) Anmeldetag: 05.09.2008
(51) Int. Cl.: B23K 26/34, F28F 19/06, C23C 26/02

(54) **Verfahren zur Oberflächenbehandlung eines Turbinenteils**

(71) Anmelder: Alstom Technology Ltd, 5400 Baden (CH)
(72) Erfinder: Scarlin, Richard Brendon, 5108 Oberflachs (CH); Kaiser, Andreas, 79713 Bad-Säckingen (DE); Masserey, Pierre-Alain, 5436 Würenlos (CH)

(57) **Zusammenfassung**

In einem Verfahren zur Oberflächenbehandlung eines Dampfturbinenteils aus einem austenitischen oder ferritisch-martensitischen Stahl wird die Oberfläche des Dampfturbinenteils mittels Laserstrahlung umgeschmolzen und zusätzlich mittels Laserstrahlung unter Zugabe eines Materials Oberflächen-legiert, wobei das dazugegebene Material unterschiedlich vom Material des Dampfturbinenteils ist. Das dazugegebene Material dient der Erhöhung der mechanischen Festigkeit und/oder des Korrosionswiderstands der Oberfläche. Durch das Verfahren wird eine optimierte Oberflächenglätte erreicht.

## Beschreibung

### Technisches Gebiet

Das Verfahren betrifft ein Verfahren zur Behandlung der Oberfläche eines Dampfturbinenteils, insbesondere zur Oberflächenglättung eines Dampfturbinenteils aus austenitischen oder ferritisch-martensitischen Stählen.

### Stand der Technik

Dampfturbinenteile aus austenitischen oder ferritisch-martensitischen Stählen, unter anderem Schaufeln, weisen vorzugsweise eine hohe Festigkeit sowie einen hohen Korrosionswiderstand auf. Dampfturbinenschaufeln, insbesondere für Hochdruck- und Mitteldruckturbinen, erzielen zudem einen Wirkungsgrad, der um so höher ist je besser die Oberflächenglätte der Schaufeln ist. Nach dem Fräsen eines Turbinenteils, insbesondere auch nach einem darauffolgenden Kugelstrahlen, weisen die Oberflächen von austenitischen und ferritisch-martensitischen Turbinenteilen eine Oberfläche hoher Rauhigkeit sowie Welligkeit auf. Um deren Aerodynamik und Wirkungsgrad zu verbessern, wird die Oberfläche poliert oder geglättet. Ein bekanntes Polierverfahren ist das Trovalisieren, bei dem der Turbinenteil in einer Trommel zusammen mit spitzen Steinen über mehrere Stunden gedreht wird. Ein anderes mögliches Polierverfahren ist das Handpolieren mittels Schleifbändern.

Ein neueres Glättungsverfahren ist das Laserpolieren, auch Laser-Umschmelzen genannt, wie es zum Beispiel in DE 103 42 750 und EP 1 516 068 offenbart ist. Dort wird eine Oberfläche auf vorbestimmte Umschmelztiefen mittels eines Lasers umgeschmolzen, wobei entsprechend der Umschmelztiefe die Oberfläche auf eine bestimmte Rauhigkeit geglättet werden. Das Glättverfahren wird unter anderem auch unter einem Schutzgas durchgeführt. Das Verfahren lässt sich auf Warm- und Kaltarbeitsstähle sowie Titan anwenden, wobei die Bearbeitungs-Parameter des Lasers angepasst werden.

Zur Verbesserung des Korrosionswiderstands und Widerstands gegen Abnützung werden die Verfahren des Oberflächen-Laser-Legierens angewendet, vielfach unter dem Begriff Laser surface alloying bekannt. Sie sind beispielsweise in US 6,143,095 offenbart, in dem auf einem Substrat aus Metall oder einer Legierung, z. B. Nickel-Basis Legierung, eine Legierungsschicht mit erhöhter Resistenz gegen Korrosion, Erosion, Ermüdung etc. mittels Laserstrahlung aufgebracht wird. Es wird beispielsweise die Aufschmelzung von Cr auf ein Substrat einer Ni-Basis-Legierung auch unter Inertgas- oder Stickstoff vorgeschlagen.

US 4,750,947 offenbart ein Legieren der Oberfläche eines Basismetalls, bei dem ein Metall mit einer Schmelztemperatur, die tiefer ist als die des Basismaterials, aufgetragen wird und mittels eines Lasers oder Elektronenstrahls mit dem Basismaterial zusammengeschmolzen wird. Es können Metalle wie Al, Cr, Cu, Co, Ni, Mn, V, Mo oder Si etc. auf Stahl-basierte oder Eisen-basierte Legierungen aufgetragen werden.

Sergey Zherebtsov et al. « Laser surface alloying of SU316 stainless steel with Al-Si », JSME International Journal, Series A, Vol. 48, No. 4, 2005, p. 292-298, offenbart ein laser surface alloying eines austenitischen Stahls, bei dem ein Schlicker mit Si und Al auf die Oberfläche aufgetragen wird, der danach mittels eines Nd:YAG Lasers geschmolzen wird. Die dadurch modifizierte Oberflächenschicht weist in Abhängigkeit der Temperatur des Substrats während dem Laserlegieren unterschiedliche Strukturen auf.

In JP6322508 wird ein Verfahren der Oberflächenmodifizierung offenbart, bei dem ein austenitischer, rostfreier Stahl durch thermisches Spritzen mit Zr- oder einer Zr-Legierung beschichtet wird, die Schicht sodann mittels eines Lasers bestrahlt wird und eine Legierungsschicht gebildet wird.

In JP4289154 wird ein Verfahren zur Modifizierung einer Titanoberfläche zur Bildung einer Schicht mit hohem Erosionswiderstand offenbart. Es wird mittels eines Laserstrahls die Oberfläche geschmolzen und wiedererstarrt, wobei während des Schmelzens Sauerstoff auf die Oberfläche gesprüht wird. Der Sauerstoff wird dabei in das Basismaterial eingebracht, wodurch eine hohe Härte und ein hoher Erosionswiderstand erreicht werden.

### Darstellung der Erfindung

Der vorliegenden Erfindung ist die Aufgabe gestellt, ein Verfahren zur Behandlung der Oberfläche eines Dampfturbinenteils zwecks Verbesserung der Oberflächenglätte und dessen Aerodynamik zu schaffen.

Diese Aufgabe wird durch ein Verfahren gemäss dem unabhängigen Anspruch gelöst. Verschiedene Ausführungen des Verfahrens sind in den abhängigen Ansprüchen angegeben.

In dem erfindungsgemässen Verfahren zur Oberflächenbehandlung eines Dampfturbinenteils aus einem austenitischen oder ferritisch-martensitischen Stahl wird die Oberfläche des Dampfturbinenteils mittels Laserstrahlung umgeschmolzen und zusätzlich mittels Laserstrahlung unter Zugabe eines Materials Oberflächen-legiert, wobei das zugegebene Material unterschiedlich vom Material des Dampfturbinenteils ist.

Das dazugegebene Material dient der Erhöhung der mechanischen Festigkeit und/oder des Korrosionswiderstands der Oberfläche.

Durch das Laser-Umschmelzen wird eine Oberflächenglätte erzielt, die höher ist im Vergleich zu der Glätte, die typischerweise durch Trovalisieren oder Handpolieren erreicht wird. Im Vergleich ist eine Reduzierung der durchschnittlichen Rauhigkeit Ra um einen Faktor vier zu erreichen.

Insbesondere, wird durch das erfindungsgemässe Verfahren eine Oberflächenglätte und ein entsprechend hoher aerodynamischer Wirkungsgrad erreicht, die auch während einer längeren Betriebszeit des Turbinenteils in einer Dampfturbine trotz Erosionsrisiko erhalten bleibt. Das zusätzliche Laser-Oberflächenlegieren bewirkt, dass die mechanische Festigkeit sowie auch der Korrosionswiderstand des Turbinenteils, der nach dem Fräsen und vor dem Umschmelzen bestanden hat, mindestens aufrechterhalten bleibt. Schliesslich hat das Verfahren den Vorteil, dass die Behandlung eines Teils innerhalb von Minuten durchgeführt werden kann, im Gegensatz von Stunden, die für herkömmliche Glättverfahren aufgebracht werden müssen.

Die Kombinierung des Laserumschmelzens mit einem Laser-Oberflächenlegieren beruht auf der Erkenntnis, dass durch alleiniges Laserumschmelzen, die mechanische Festigkeit und der Korrosionswiderstand aufgrund des grobkörnigen Gussgefüges stark reduziert werden würde. Das Laser-Oberflächenlegieren kompensiert hingegen diese Abnahme der Festigkeit und des Korrosionswiderstands.

Das erfindungsgemässe Verfahren ist auch bei Dampfturbinenteilen wirksam, deren Festigkeit und Korrosionswiderstand, nach dem Fräsen, zunächst mittels Wärmebehandlung oder Wärmeumformung erhöht worden ist. Durch das Verfahren wird eine mechanische Festigkeit erreicht, die mindestens der Festigkeit entspricht. Ebenso wird ein Korrosionswiderstand erreicht, der mindestens dem Korrosionswiderstand entspricht, der nach einer Wärmebehandlung oder Wärmeumformung bestanden hat.

Zudem ist mit dem erfindungsgemässen Verfahren eine Optimierung der Auswurfrate erreichbar.

Das Umschmelzen und das Oberflächen-legieren der Oberfläche des Dampfturbinenteils können gleichzeitig durchgeführt werden. Die beiden Verfahrensschritte können jedoch auch nacheinander durchgeführt werden, wobei der Grad der Wiedererstarrung zwischen den Verfahrensschritten frei wählbar ist.

In einem Verfahren für das Oberflächenbehandeln von Dampfturbinenteilen aus einem austenitischen oder ferritisch-martensitischen Stahl wird beim Laser-Oberflächenlegieren Cr oder Al oder beides zugegeben, welche den Oxidationswiderstand der Oberfläche erhöhen.

Anstelle oder zusätzlich zu diesen Elementen werden beim Laser-Oberflächenlegieren eines oder mehrere der ausscheidungshärtenden Elemente W, Mo, Ti, V oder Nb dazugegeben. Durch Zugabe eines oder mehrerer dieser Elemente werden durch Karbidbildung insbesondere mechanischen Eigenschaften optimiert.

In einem weiteren Verfahren für das Oberflächenbehandeln von Dampfturbinenteilen aus einem austenitischen Stahl wird beim Laser-Oberflächenlegieren eines oder mehrere der Elemente Ti, Al oder Nb dazugegeben, durch die intermetallische Phasen gebildet werden und dadurch insbesondere mechanischen Eigenschaften optimiert wird.

In einem weiteren Verfahren für das Oberflächenbehandeln von Dampfturbinenteilen aus einem austenitischen Stahl wird beim Laser-Oberflächenlegieren eines oder beide der Mischkristall-härtenden Elemente W oder Mo dazugegeben. Dies bewirkt insbesondere eine Verbesserung der mechanischen Eigenschaften.

In all den genannten Verfahren kann zur weiteren Erhöhung der Festigkeit das Dampfturbinenteil vor der Oberflächenbehandlung einer zusätzlichen Wärmebehandlung unterworfen werden. Diese bewirkt die Bildung von Ausscheidungen, wo Karbide und intermetallische Phasen erwünscht sind, um die mechanischen Eigenschaften zu optimieren.

In einer weiteren Ausführung des Verfahrens wird das Dampfturbinenteil nach der Oberflächenbehandlung einer weiteren Wärmebehandlung unterworfen.

Die Zugabe der Materialien zur Laser-Oberflächenlegierung kann beispielsweise durch ein galvanisches Verfahren, thermisches Aufsprühen, Auftragen eines Schlickers oder Aufsprühen eines Pulvers durchgeführt werden.

Zur Durchführung des Umschmelzens und Oberflächenlegierens ist anstelle einer Laserstrahlung auch ein Elektronenstrahl einsetzbar.

## Patentansprüche

1. Verfahren zur Behandlung der Oberfläche eines Dampfturbinenteils aus einem austenitischen oder ferritisch-martensitischen Stahl,
**dadurch gekennzeichnet, dass**
die Oberfläche eines Dampfturbinenteils mittels Laserstrahlung oder Elektronenstrahlung umgeschmolzen und zusätzlich mittels Laserstrahlung oder Elektronenstrahlung unter Zugabe eines Materials Oberflächenlegiert wird, wobei das dazugegebene Material unterschiedlich vom Material des Dampfturbinenteils ist.

2. Verfahren nach Anspruch 1, **dadurch gekennzeichnet, dass**
das im Oberflächenlegieren verwendete Material zur Erhöhung der mechanischen Festigkeit und/oder des Korrosionswiderstands der Oberfläche des Dampfturbinenteils dazugegeben wird.

3. Verfahren nach Anspruch 2, **dadurch gekennzeichnet, dass**
beim Oberflächenlegieren mittels Laser- oder Elektronenstrahlung Cr oder Al oder beides zugegeben wird.

4. Verfahren nach Anspruch 2 oder 3, **dadurch gekennzeichnet, dass**
beim Oberflächenlegieren mittels Laser- oder Elektronenstrahlung eines oder mehrere der ausscheidungshärtenden Elemente W, Mo, Ti, V oder Nb dazugegeben wird.

5. Verfahren nach einem der vorangehenden Ansprüche, **dadurch gekennzeichnet, dass**
beim Oberflächenlegieren mittels Laser- oder Elektronenstrahlung eines oder mehrere der Elemente Ti, Al oder Nb dazugegeben wird.

6. Verfahren nach einem der vorangehenden Ansprüche, **dadurch gekennzeichnet, dass**
beim Oberflächenlegieren mittels Laser- oder Elektronenstrahlung eines oder beide der Mischkristall-härtenden Elemente W oder Mo dazugegeben wird.

7. Verfahren nach einem der vorangehenden Ansprüche, **dadurch gekennzeichnet, dass**
das Dampfturbinenteil nach der Oberflächenbehandlung einer Wärmebehandlung oder Wärmeumformung unterworfen wird.
